# EUROPÄISCHE PATENTANMELDUNG

(11) **EP 1 164 648 A2**
(43) Veröffentlichungstag der Anmeldung: **19.12.2001**
(21) Anmeldenummer: 01890172.8
(22) Anmeldetag: 05.06.2001
(51) Int. Cl.: H01M 2/18

(54) **Vorrichtung zum Herstellen von Taschen für Batterie-oder Akkumulatorplatten**

(30) Priorität: 13.06.2000 AT 10202000
(71) Anmelder: BM-Battery Machines Maschinenbau GmbH, 8273 Sebersdorf (AT)
(72) Erfinder: Schwetz, Anton, 8273 Ebersdorf (AT); Ilgoutz, Friedrich, 9170 Ferlach (AT); Müller, Günther, 8184 Anger (AT); Rotbart, Thomas, 8190 Birkfeld (AT); Kurweil, Johann, 8093 St. Peter am Ottersbach (AT)
(74) Vertreter: Beer, Manfred, Dipl.-Ing.

(57) **Zusammenfassung**

Eine Vorrichtung zum Herstellen von Taschen für Platten (10) von Batterien oder Akkumulatoren besitzt eine Fördereinrichtung (1) zum Zuführen von Separatorband in einer ersten Ebene (11), eine Einrichtung (4, 5) zum Abtrennen von Separatorbandabschnitten vom zugeführten Separatorband eine weitere Fördereinrichtung (2) zum Bereitstellen von Separatorbandabschnitten an einer Faltstelle (15) und eine Einrichtung (9) zum Zuführen von einzutaschenden Platten (10) zur Faltstelle (15) in einer zweiten Ebene, die zur ersten Ebene (11) senkrecht steht. Neben der Ebene (11), in der ein Separatorbandabschnitt an der Faltstelle (15) bereitgestellt wird, ist bezogen auf die Vorschubrichtung des Separatorbandabschnittes nach den Faltwalzen (13, 14) eine mit Unterdruck beaufschlagte Walze (17) als Vorrichtung (16) zum Spannen des Separatorbandabschnittes, der in der Faltstelle (15) bereitgestellt ist, vorgesehen ist. Im Bereich der Faltstelle (15) ist auf der Seite der Ebene (11), in der ein Separatorbandabschnitt an der Faltstelle (15) bereitgestellt ist, die der Seite, von der her eine einzutaschende Platte (10) zugeführt wird, gegenüberliegt, ein Paar Faltwalzen (13, 14) vorgesehen, von welchen der Separatorbandabschnitt und die einzutaschende Platte (10) erfaßt und weggezogen werden, wobei der Separatorbandabschnitt gefaltet und von beiden Seiten her an die einzutaschende Platte (10) angelegt wird.

## Beschreibung

Die Erfindung betrifft eine Vorrichtung mit den Merkmalen des einleitenden Teils von Anspruch 1.

Eine Vorrichtung zum Herstellen von Taschen für Platten und für Akkumulatoren oder Batterien ist aus der EP 0 029 017 B bekannt. Bei dieser bekannten Vorrichtung wird ein Separatorbandabschnitt, der um eine Platte für einen Akkumulator oder eine Batterie unter Ausbilden einer Tasche zu falten ist, durch einen Faltschacht zu einer Faltstelle vorgeschoben. An der Faltstelle wird eine einzutaschende Platte quer zum Faltschacht vorgeschoben und der Separatorbandabschnitt von der vorgeschobenen Platte aus einem Schlitz im Faltschacht herausgezogen. Die so aus dem Faltschacht herausbewegte Anordnung aus Platte und um diese gefaltetem Separatorbandabschnitt wird von einem Paar Quetschrollen erfaßt und zum Ausbilden einer Tasche einer Vorrichtung zum Verbinden der quer zur Faltlinie verlaufenden Seitenränder des gefalteten Separatorbandabschnittes zugeführt.

Eine ähnliche Vorrichtung zum Herstellen von Taschen für Batterieplatten ist aus der EP 0 506 645 A bekannt. Auch bei dieser Vorrichtung wird ein Separatorbandabschnitt in einem Faltschacht an einer Faltstelle bereitgestellt und durch Vorschieben der einzutaschenden Platte durch einen Schlitz aus dem Faltschacht herausgezogen. Die so hergestellte Anordnung aus gefaltetem Separatorband und dazwischen angeordneter Platte wird durch zwei Reibwalzenpaare der weiteren Verarbeitung zugeführt.

Aus der AT 403 631 B (= US 5 803 935 A) ist eine Vorrichtung zum Fördern und Ablängen von Separatorband bekannt, die zum Vorschieben des Separatorbandes in einem Faltschacht mit Unterdruck beaufschlagte Förderbänder aufweist. Von diesen Förderbändern werden Separatorbandabschnitte im Faltschacht ähnlich wie bei der EP 0 029 017 B und der EP 0 506 645 A an der Faltstelle bereitgestellt. Der Separatorbandabschnitt wird durch eine quer zu diesem vorgeschobene, einzutaschende Platte für einen Akkumulator oder eine Batterie durch einen Schlitz aus dem Faltschacht herausgezogen.

Problematisch bei den bekannten, mit einem Faltschacht ausgestatteteten Vorrichtungen ist es, daß das Bereitstellen von Separatorbandabschnitten an der Faltstelle, wozu diese im Faltschacht vorgeschoben werden müssen, insbesondere bei dünnem und wenig steifem Separatorband problematisch ist und häufig zu Fehlfunktionen führt, so daß die Gefahr besteht, daß nicht ordentlich eingetaschte Akkumulator- oder Batterieplatten erhalten werden.

Der Erfindung liegt die Aufgabe zugrunde, eine Vorrichtung der eingangs genannten Gattung anzugeben, mit der auch ohne Faltschacht Batterie- oder Akkumulatorplatten in Separatorbandabschnitte eingetascht werden können.

Gelöst wird diese Aufgabe mit einer Vorrichtung, welche die Merkmale des unabhängigen Anspruches 1 aufweist.

Bevorzugte und vorteilhafte Ausgestaltungen der erfindungsgemäßen Vorrichtung sind Gegenstand der Unteransprüche.

Dadurch, daß bei der erfindungsgemäßen Vorrichtung Separatorbandabschnitte der Faltstelle nicht in einem Faltschacht zugeführt und an der Faltstelle nicht in einem Faltschacht für den Faltvorgang bereitgestellt werden, ergeben sich keine Probleme mit dem Vorschieben von Separatorband bzw. Separatorbandabschnitten durch einen Faltschacht zur Faltstelle. Der eigentliche Faltvorgang ist bei der erfindungsgemäßen Vorrichtung ebenfalls problemlos, da es bei der erfindungsgemäßen Vorrichtung genügt, wenn der Separatorbandabschnitt von der quer zu diesem vorgeschobenen, einzutaschenden Platte in Richtung auf die Faltwalzen bewegt wird, worauf er von den Faltwalzen erfaßt und der Faltvorgang problemlos ausgeführt wird. Bei der erfindungsgemäßen Vorrichtung können auch sehr dünne Separatorbänder verarbeitet werden, da im Gegensatz zu den bekannten, mit einem Faltschacht ausgestatteten Vorrichtungen den eigentlichen Faltvorgang behindernde Reibung nicht auftritt, weil das Separatorband von der einzutaschenden Platte nicht durch einen Schlitz im Faltschacht aus diesem herausgeschoben werden muß.

Der zuvor geschilderte Vorteil ergibt sich bei der erfindungsgemäßen Vorrichtung auch beim Verarbeiten von stärkerem/steiferem Separatorband, da dieses beim Faltvorgang nicht durch einen Schlitz aus dem Faltschacht herausbewegt werden muß.

Insbesondere beim Verarbeiten von dünnem/wenig steifem/schlaffem Separatorband ist es bevorzugt, wenn bezogen auf die Vorschubrichtung von Separatorband nach dem Faltwalzenpaar eine Vorrichtung zum Spannen des an der Faltstelle bereitgestellten Separatorbandabschnittes, z.B. eine mit Unterdruck beaufschlagte, drehangetriebene Walze, vorgesehen ist. Dadurch wird der Separatorbandabschnitt an der Faltstelle faltenfrei und glatt (eben) bereitgestellt und der eigentliche Faltvorgang vorteilhaft unterstützt.

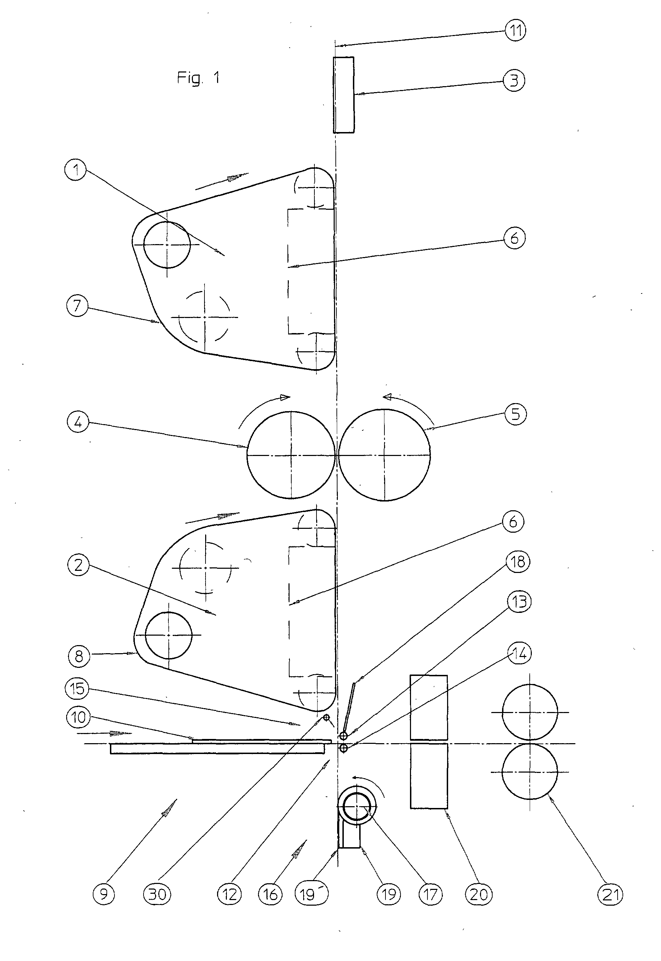

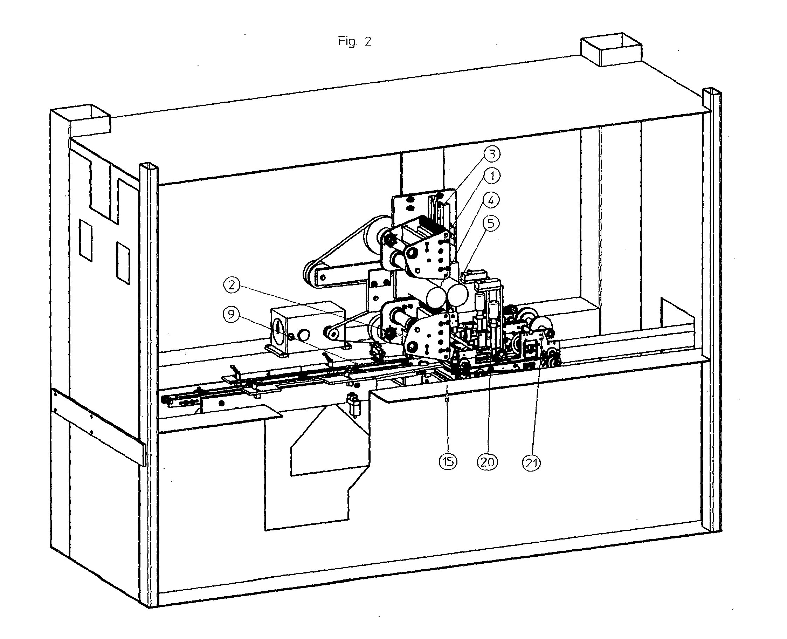

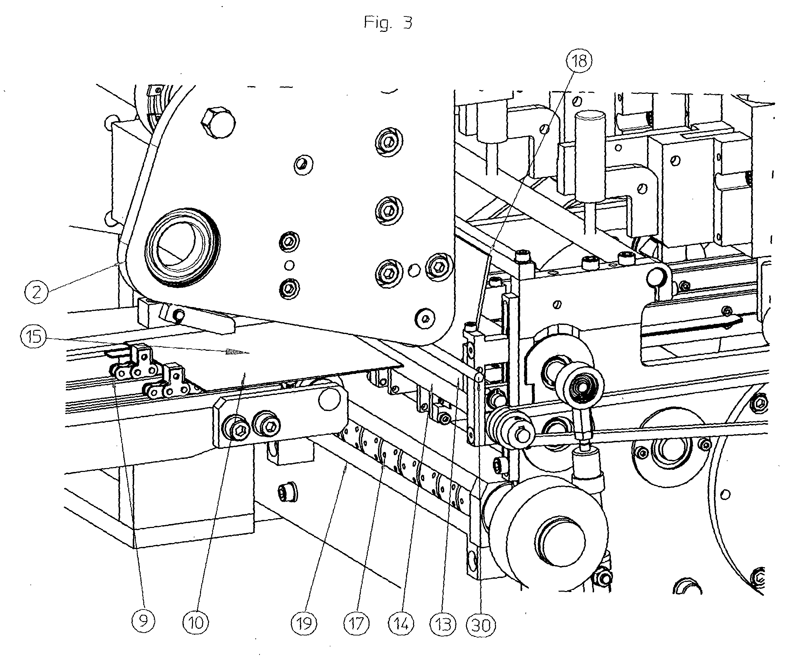

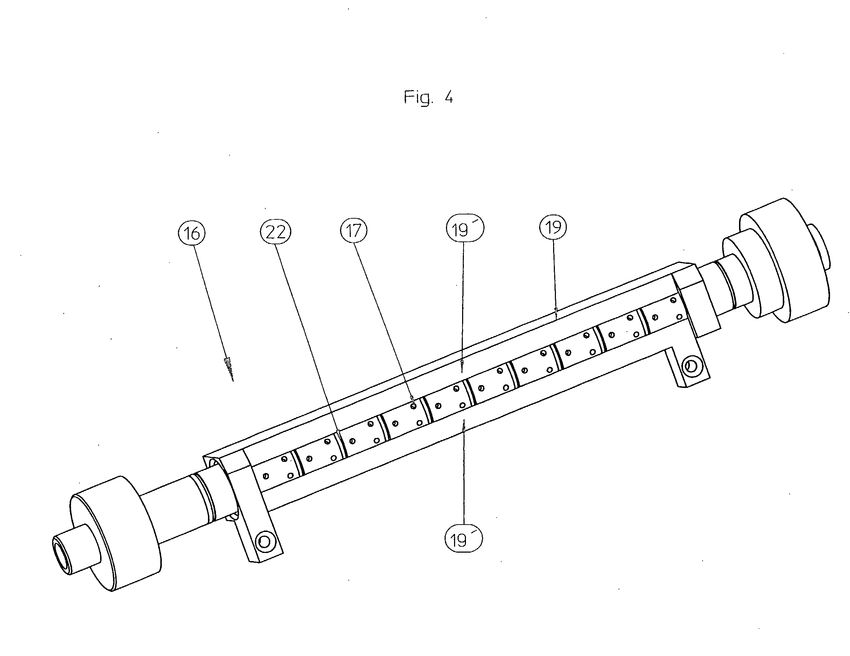

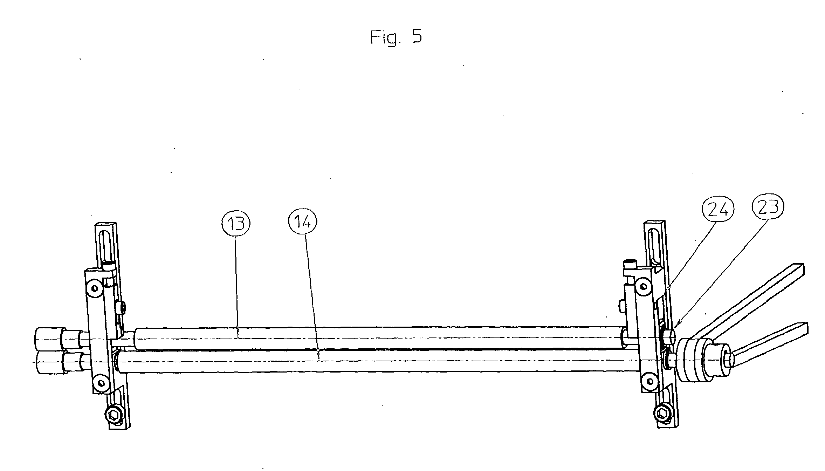

Weitere Einzelheiten und Vorteile der erfindungsgemäßen Anordnung ergeben sich aus der nachstehenden Beschreibung eines bevorzugten Ausführungsbeispieles. Es zeigt: Fig. 1 schematisch eine erfindungsgemäße Vorrichtung, Fig. 2 eine praktische Ausführungsform der erfindungsgemäßen Vorrichtung (ohne Vorratsspule für das Separatorband), Fig. 3 eine Einzelheit der Vorrichtung aus Fig. 2 im Bereich der Faltstelle mit den Faltwalzen und der Spannvorrichtung, Fig. 4 die Faltwalzen für sich und Fig. 5 die Spannwalze für sich.

Eine in Fig. 1 schematisch gezeigte, erfindungsgemäße Vorrichtung besitzt als Fördereinrichtungen 1 und 2 für (von einer Vorratsspule kommendes und von oben her in einer Ebene 11 zugeführtes) Separatorband zwei mit Unterdruck beaufschlagte Endlosförderbänder, wobei oberhalb der oberen Fördereinrichtung 1 eine Führungseinrichtung 3 vorgesehen ist, die dafür sorgt, daß von einer (in Fig. 1 nicht gezeigten) Vorratsspule kommendes Separatorband der oberen Fördereinrichtung 1 richtig zugeführt wird. Zwischen den beiden Fördereinrichtungen 1 und 2 sind Schneidwalzen 4, 5 vorgesehen, die mit einer Schneidklinge das zugeführte Separatorband in Separatorbandabschnitte mit der jeweils gewünschten Länge zerteilen. Zusätzlich können die Schneidwalzen 4, 5 auch mit einer Kerbvorrichtung (Kerbleiste) versehen sein, um jeden Separatorbandabschnitt in seiner Mitte vorzufalzen.

Die Fördereinrichtungen 1 und 2 können beispielsweise die aus der AT 403 631 B bekannte Konstruktion besitzen, wobei bevorzugt ist, daß statt der in der AT 403 631 B beschriebenen Endlosförderbänder mit Löchern für das Wirksamwerden des Unterdrucks, der über Unterdruckkästen 6 angelegt wird, mehrere parallel zueinander verlaufende, mit geringem Abstand nebeneinander angeordnete Endlosriemen 7 bzw. 8 aufweist.

Unterhalb der unteren Fördereinrichtung 2 ist eine Vorrichtung 9 zum Zuführen von einzutaschenden Platten 10 für Akkumulatoren oder Batterien vorgesehen. Auf der der Zuführvorrichtung 9 für Platten 10 gegenüberliegenden Seite ist unmittelbar neben der Ebene 11, in der Separatorband bzw. Separatorbandabschnitte zugeführt werden, ein Faltwalzenpaar 12 aus zwei Faltwalzen 13, 14 vorgesehen, von welchen wenigstens eine, vorzugsweise die unter Walze 14, drehangetrieben ist.

Um sicherzustellen, daß ein an der Faltstelle 15 bereitgestellter Separatorbandabschnitt gegenüber dem Faltwalzenpaar 12 ordentlich ausgerichtet ist und von den Faltwalzen 13 und 14 richtig erfaßt wird, kann dem Faltwalzenpaar 12 im wesentlichen gegenüberliegend ein Düsenrohr 30 angeordnet sein. Das, vorzugsweise an mehreren Stellen, mit Druckluft beaufschlagte Düsenrohr 30 hat schräg nach unten gerichtete Düsen. Die aus den Düsenbohrungen des Düsenrohres 30 austretenden Luftstrahlen belasten den Separatorbandabschnitt in Richtung auf das Faltwalzenpaar 12 hin und halten ihn gerade. So wird ein "schräges" Erfassen des Separatorbandabschnittes durch die Faltwalzen 13 und 14 vermieden und es entstehen keine "schiefen" Taschen, also Taschen, deren Seitenkanten zur Faltlinie nicht senkrecht verlaufen.

Unterhalb des Faltwalzenpaares 12 ist als Vorrichtung 16 zum Spannen eines zugeführten und an der Faltstelle 15 bereitgestellten Separatorbandabschnittes eine mit Unterdruck beaufschlagte Walze 17, der ein Drehantrieb zugeordnet ist, vorgesehen.

Sobald ein Separatorbandabschnitt von der unteren Fördereinrichtung 2 der beiden mit Unterdruck beaufschlagten Fördervorrichtungen 1, 2 an der Faltstelle 15 so bereitgestellt und ausgerichtet worden ist, daß die Mitte des Separatorbandabschnittes, die gegebenenfalls vorgefalzt ist, in der Höhe der Ebene, in der eine einzutäschende Platte 10 zugeführt wird, ausgerichtet ist, wird die Platte 10 vorgeschoben. Durch das Vorschieben der Platte 10 legt sich der Separatorbandabschnitt beidseits seiner Mitte an die Walzen 13, 14 an. Der Separatorbandabschnitt und die Platte 10 werden von den Faltwalzen 13, 14 erfaßt und der Separatorbandabschnitt wird durch die Faltwalzen 13, 14 um die Platte 10 herumgefaltet, während die Anordnung aus Platte 10 und Separatorbandabschnitt von den Faltwalzen 13, 14 (nach rechts in Fig. 1) gezogen wird. Bei diesem Faltvorgang werden die beiden Enden des Separatorbandabschnittes von der unteren Fördervorrichtung 2 und der Spannwalze 17 weggezogen und fortschreitend beidseits (von oben und von unten her) an die Platte 10 angelegt, so daß schließlich der Separatorbandabschnitt oben und unten an der einzutaschenden Platte 10 anliegt. Die so hergestellte Anordnung wird der Vorrichtung 20 zum Verbinden der quer zur Falzlinie ausgerichteten Ränder des Separatorbandabschnittes zugeführt, um in dieser Vorrichtung 20 die Ränder des Separatorbandabschnittes miteinander zu verbinden. Diese Vorrichtung kann eine Ultraschallschweißvorrichtung oder eine Rändelvorrichtung der in der EP 506 645 A beschriebenen Bauart sein.

Die so eingetaschte Akkumulator- oder Batterieplatte 10 wird einer gegebenenfalls vorgesehenen Besäumvorrichtung 21 zugeführt, um die Ränder der Tasche, in der eine Platte 10 für einen Akkumulator oder eine Batterie angeordnet ist, zu besäumen. Im Anschluß daran wird die eingetaschte Platte 10 der weiteren Verarbeitung bzw. Herstellung von Batterien oder Akkumulatoren zugeführt. Beispielsweise werden Stapel aus positiven und negativen Akkumulatorplatten 10 gebildet.

In Fig. 2 ist eine praktische Ausführungsform der von ihrem Prinzip her in Fig. 1 gezeigten Vorrichtung dargestellt. Man erkennt die beiden Fördereinrichtungen 1 und 2 (die eigentlichen Förderbänder 7, 8 sind nicht gezeigt, sondern lediglich die Umlenkrollen derselben), die oberhalb der oberen Fördereinrichtung 1 angeordnete Leiteinrichtung 3, die Rotationsscheren 4, 5 zum Abtrennen eines Separatorbandabschnittes mit der gewünschten Länge vom zugeführten Separatorband, die unterhalb der Rotationsscheren 4, 5 angeordnete zweite, mit Unterdruck beaufschlagte Fördereinrichtung 2, sowie die Antriebe für das synchrone Antreiben der beiden Fördereinrichtungen 1, 2 und der Schneideinrichtung in Form der Rotationsschere 4, 5 (mit Schneid- bzw. Kerbvorsprüngen ausgerüstete Walzen).

Des weiteren ist in Fig. 2 die Zuführvorrichtung 9 für einzutaschende Platten 10 und die Faltstelle 15 mit den Faltwalzen 13, 14 und der Spannwalze 17 dargestellt, ebenso wie die im Anschluß daran angeordneten, im gezeigten Beispiel als Ultraschallschweißvorrichtung ausgebildete Vorrichtung 20 zum Verbinden der beiden Seitenränder der so gebildeten Tasche und im Anschluß daran die Besäumvorrichtung 21.

Fig. 3 zeigt im vergrößerten Maßstab die Faltstelle 15 mit den beiden Faltwalzen 13, 14 und einen oberhalb der Faltwalzen 13, 14 angeordneten Leiteinrichtungen in Form eines Leitbleches 18, sowie die unterhalb der Faltwalzen 13, 14 angeordnete Spannwalze 17, die eine mit Unterdruck beaufschlagte, in einem Gehäuse 19 angeordnete Walze 17 ist. Der Spalt in dem Gehäuse 19, durch das die Spannwalze 17 wirksam wird, kann, wie in Fig. 3 gezeigt, mit bogenförmigen Führungsstäben 22 ausgestattet sein.

Fig. 3 zeigt auch die Zuführvorrichtung 9 für Platten 10 und eine auf dieser angeordnete Platte 10, woraus ersichtlich ist, daß Platten 10 von der Zuführvorrichtung 9 genau in den Spalt zwischen den Faltwalzen 13, 14 vorgeschoben wird, wenn der Faltvorgang auszuführen ist.

Fig. 4 zeigt die Spannwalze 17, in dem sie aufgenommen ist, und das Gehäuse 19 für sich gesehen, mit den Anlageflächen 19' und den im Ausführungsbeispiel gebogenen Stäben 22, die den Spalt des Gehäuses 19, durch den die Spannwalze 17 vorsteht, überbrücken.

Fig. 5 zeigt die Faltwalzen 13, 14 und den der unteren 14 der beiden Faltwalzen 13, 14 zugeordneten Antrieb in Form eines Riemenantriebes und die Möglichkeit, den Abstand zwischen den Walzen 13, 14, also den Spalt zwischen den Walzen 13, 14 auf das jeweils gewünschte und erforderliche Maß einstellen zu können. Hiezu ist die obere Faltwalze 13 in verstellbaren Schlitten 23 drehbar gelagert, wobei die Schlitten in lotrechten, maschinengestellfesten Führungen 24 verstellbar geführt sind.

Zusammenfassend kann ein Ausführungsbeispiel der Erfindung wie folgt dargestellt werden:
Eine Vorrichtung zum Herstellen von Taschen für Platten 10 von Batterien oder Akkumulatoren besitzt eine Fördereinrichtung 1 zum Zuführen von Separatorband in einer ersten Ebene 11, eine Einrichtung 4, 5 zum Abtrennen von Separatorbandabschnitten vom zugeführten Separatorband eine weitere Fördereinrichtung 2 zum Bereitstellen von Separatorbandabschnitten an einer Faltstelle 15 und eine Einrichtung 9 zum Zuführen von einzutaschenden Platten 10 zur Faltstelle 15 in einer zweiten Ebene, die zur ersten Ebene 11 senkrecht steht. Neben der Ebene 11, in der ein Separatorbandabschnitt an der Faltstelle 15 bereitgestellt wird, ist bezogen auf die Vorschubrichtung des Separatorbandabschnittes nach den Faltwalzen 13, 14 eine mit Unterdruck beaufschlagte Walze 17 als Vorrichtung 16 zum Spannen des Separatorbandabschnittes, der in der Faltstelle 15 bereitgestellt ist, vorgesehen ist. Im Bereich der Faltstelle 15 ist auf der Seite der Ebene 11, in der ein Separatorbandabschnitt an der Faltstelle 15 bereitgestellt'ist, die der Seite, von der her eine einzutaschende Platte 10 zugeführt wird, gegenüberliegt, ein Paar Faltwalzen 13, 14 vorgesehen, von welchen der Separatorbandabschnitt und die einzutaschende Platte 10 erfaßt und weggezogen werden, wobei der Separatorbandabschnitt gefaltet und von beiden Seiten her an die einzutaschende Platte 10 angelegt wird.

## Patentansprüche

1. Vorrichtung zum Herstellen von Taschen für Platten (10) von Batterien oder Akkumulatoren mit einer Fördereinrichtung (1) zum Zuführen von Separatorband in einer ersten Ebene (11), mit einer Einrichtung (4, 5) zum Abtrennen von Separatorbandabschnitten vom zugeführten Separatorband, mit einer Fördereinrichtung (2) zum Bereitstellen von Separatorbandabschnitten an einer Faltstelle (15) und mit einer Einrichtung (9) zum Zuführen von einzutaschenden Platten (10) zur Faltstelle (15) in einer zweiten Ebene, die zur ersten Ebene (11) senkrecht steht, **dadurch gekennzeichnet, daß** im Bereich der Faltstelle (15) auf der Seite der Ebene (11), in der ein Separatorbandabschnitt an der Faltstelle (15) bereitgestellt ist, die der Seite, von der einzutaschenden Platte (10) zugeführt werden, gegenüberliegt, um zueinander parallele Achsen drehbare Faltwalzen (13, 14) vorgesehen ist, von welchen wenigstens eine drehangetrieben ist.

2. Vorrichtung nach Anspruch 1, **dadurch gekennzeichnet, daß** neben der Ebene (11), in der ein Separatorbandabschnitt an der Faltstelle (15) bereitgestellt ist, bezogen auf die Vorschubrichtung des Separatorbandabschnittes nach den Faltwalzen (13, 14) eine Vorrichtung (16) zum Spannen des Separatorbandabschnittes, der in der Faltstelle (15) bereitgestellt ist, vorgesehen ist.

3. Vorrichtung nach Anspruch 2, **dadurch gekennzeichnet, daß** die Vorrichtung (16) zum Spannen des Separatorbandabschnittes eine drehbare, mit Unterdruck beaufschlagte Walze (17) aufweist.

4. Vorrichtung nach Anspruch 3, **dadurch gekennzeichnet, daß** die Walze (17) in einem Gehäuse (19) angeordnet ist, das Anlageflächen (19') für den Separatorbandabschnitt aufweist.

5. Vorrichtung nach einem der Ansprüche 1 bis 4, **dadurch gekennzeichnet, daß** die Vorrichtung (4, 5) zum Ablängen von Separator- bandabschnitten zwischen der Fördereinrichtung (1) zum Zuführen von Separatorband und der Fördereinrichtung (2) zum Bereitstellen von Separatorband an der Faltstelle (15) angeordnet ist.

6. Vorrichtung nach einem der Ansprüche 1 bis 5, **dadurch gekennzeichnet, daß** die Vorrichtung zum Ablängen von Separatorbandabschnitten zwei drehbar gelagerte Walzen (4, 5) mit wenigstens einer Schneidklinge ist.

7. Vorrichtung nach Anspruch 6, **dadurch gekennzeichnet, daß** die Walzen (4, 5) der Vorrichtung zum Ablängen von Separatorbandabschnitten mit einer Kerbleiste zum Vorfalzen eines Separatorbandabschnittes ausgestattet ist.

8. Vorrichtung nach einem der Ansprüche 4 bis 7, **dadurch gekennzeichnet, daß** der Spalt, durch das die Spannwalze (17) aus dem Gehäuse (19) herausragt, durch im wesentlichen in Förderrichtung verlaufende Stäbe (22), die mit Abstand voneinander angeordnet sind, überbrückt ist.

9. Vorrichtung nach einem der Ansprüche 1 bis 8, **dadurch gekennzeichnet, daß** die Fördereinrichtung (1) und die Fördereinrichtung (2) zum Bereitstellen von Separatorbandabschnitten, wie an sich bekannt, mit Unterdruck beaufschlagte Endlosförderglieder (7, 8) aufweisen, wobei die Endlosförderglieder (7, 8) zueinander parallel verlaufende Endlosriemen sind, die mit Abstand voneinander angeordnet sind, wobei der Unterdruck über die Spalte zwischen den Endlosfördergliedern (7, 8) angelegt wird.

10. Vorrichtung nach einem der Ansprüche 1 bis 9, **dadurch gekennzeichnet, daß** oberhalb der Faltwalzen (13, 14) eine plattenförmige Leiteinrichtung (18) vorgesehen ist.

11. Vorrichtung nach einem der Ansprüche 1 bis 10, **dadurch gekennzeichnet, daß** der Abstand zwischen den Faltwalzen (13, 14) einstellbar ist.

12. Vorrichtung nach einem der Ansprüche 1 bis 11, **dadurch gekennzeichnet, daß** die untere (14) der Faltwalzen (13, 14) mit einem Drehantrieb gekuppelt ist.

13. Vorrichtung nach einem der Ansprüche 1 bis 12, **dadurch gekennzeichnet, daß** die obere Faltwalze (13) im Maschinengestell verstellbar gelagert ist.

14. Vorrichtung nach einem der Ansprüche 1 bis 13, **dadurch gekennzeichnet, daß** dem Faltwalzenpaar (12) gegenüberliegend ein mit Druckluft beaufschlagbares Düsenrohr (30) vorgesehen ist.

15. Vorrichtung nach Anspruch 14, **dadurch gekennzeichnet, daß** die Achsen der Düsenbohrungen des Düsenrohres (30) schräg nach unten verlaufen.
